# EUROPEAN PATENT SPECIFICATION

(11) **EP 4 036 427 B1**
(45) Date of publication and mention of the grant of the patent: **30.07.2025**
(21) Application number: 21213887.9
(22) Date of filing: 10.12.2021
(51) Int. Cl.: F16B 21/02, B60J 5/04

(54) **FASTENER**
BEFESTIGUNGSMITTEL
ÉLÉMENT DE FIXATION

(30) Priority: 27.01.2021 EP 21153777; 24.02.2021 EP 21159085; 24.03.2021 EP 21164610
(43) Date of publication of application: 03.08.2022
(73) Proprietor: Illinois Tool Works, Inc., Glenview, Illinois 60025 (US)
(72) Inventor: YON, Fulvio Pacifico, Glenview, 60025 (US); GIACOMELLI, Ilaria, Glenview, 60025 (US)
(74) Representative: HGF

(56) References cited:
- EP-A1- 3 722 127
- WO-A1-2018/089045
- WO-A1-2021/140027
- KR-A- 20210 015 337
- US-A1- 2019 136 894

## Description

### Technical Field of Invention

The invention relates to a fastener. In particular, the invention relates to a fastener for a door module that is fastened to a door module. More specifically, the invention relates to a fastener for a door module, provided with a gasket for improved sealing.

### Introduction

The automotive industry is increasingly using quick-fix fasteners, such as turn-lock fasteners, for attaching or fixing components, e.g. door panels or any other suitable component, to a vehicle structure, e.g. the interior and or exterior chassis, the underbody or door frame or door structure.

Currently available fasteners include metal, as well as, plastic fasteners, such as, for example, standard screws and rivets (for a strong but irremovable bond) requiring specific tools, as well as, time for installation. Other commonly used fasteners may include quarter-turn fasteners (with or without overmoulded seals) that can be preassembled on the component or structure to then be coupled with the other structure or component.

Often, the modules fixed to or into the vehicle structure include electrical components and parts (e.g. electrical window mechanism), so a water-tight seal is required to protect the "Interior" from water ingress through the fastener apertures. As a result, some known fastener solutions may comprise an overmoulded seal (e.g. rubber or silicone) that is arranged to as to sealingly "wedge" between the fastener and vehicle structure.

However, for fasteners with such currently available seals it can be difficult for the user to compress the fastener seal sufficiently to then turn the quarter-turn fastener into locking engagement, due to an inadequate overmould seal arrangement and/or seal profile. In particular, the difficulty to lockingly engage the components with the fastener may increase if, for example, the aperture edge of the structure or component (e.g. metal sheet material) comprises burrs, or other uneven edges from "cutting" the aperture or hole, on the side where the hammer member lockingly engages with the surface of the structure or component, because friction between the fastener and the structure is significantly increase potentially damaging the seal during locking.

Also, despite the "quick-fix" nature, these fasteners have to provide a strong bond between the component and the vehicle structure, such as provided by the more commonly utilised permanent fasteners (screws, rivets etc), while being easy to use (e.g. without the need for a special tool) and removable.

Consequently, it is an object of the present invention to provide an improved fastener, such as a quarter-turn fastener, adapted to overcome at least some of the problems of the prior art.

Fastener comprising a sealing ring is known from EP 3 722 127 A1 and from WO 2018/089045 A1.

### Summary of the Invention

According to a first aspect of the invention, there is provided a fastener for securing to at least a first panel having a collar defining an opening formed therein, the fastener comprising:
a fastening portion adapted to be inserted in a first direction through the opening of the collar and then moved in a second direction into an engaged positioned to secure the fastener to the first panel, the second direction being opposite to the first direction; and
a body having a circumferential gasket secured thereto such that the gasket is arranged to sealingly engage with an inner surface of the collar when the fastener is inserted into the collar;
wherein the gasket is configured to engage the inner surface of the collar to provide a first level of resistance when moving in the first direction and a second level of resistance when moving in the second direction, the first level of resistance being lower than the second level of resistance.

The fastener of the present invention provides the advantage of a secure coupling with an improved bond between, for example, a door module and the door structure, while ensuring an improved compression of, for example, a door module seal to maintain a watertight fluid seal. In addition, the fastener provides the advantage of an improved ease of use (no special tools required) as it can be preassembled, for example on the door module, thus minimising the assembly time.

Advantageously, the fastener further comprises a protrusion arranged to engage a corresponding protrusion of the first panel when the fastener is inserted into the collar, the protrusion and corresponding protrusion being configured to move the fastener in the second direction on rotation of the fastener relative to the first panel.

Advantageously, the fastening portion comprises a retaining member adapted to move behind a portion of the first panel and optionally a second panel on rotation of the fastener relative to the first panel.

According to the invention, the gasket comprises an upper lip and a lower lip spaced in the first direction. Preferably, the upper lip and the lower lip define respective circumferential perimeters of the gasket, and wherein the upper lip has a larger diameter than the lower lip.

Advantageously, the upper lip and the lower lip define respective circumferential perimeters of the gasket, and wherein the lower lip has a larger diameter than the upper lip.

Advantageously, the gasket comprises a mould division line.

Advantageously, the mould division line is disposed on an upper surface of the upper lip.

Advantageously, the mould division line is disposed on a lower surface of the lower lip.

Advantageously, the mould division line is disposed on a lower surface of the upper lip.

Advantageously, the mould division line is disposed on a circumferential edge of the first lip or the second lip.

According to another aspect of the present invention, there is provided a panel comprising an opening and a fastener according to the first aspect of the invention mounted within the opening.

### Brief Description of Drawings

Example embodiment(s) of the invention are illustrated in the accompanying drawings, in which:

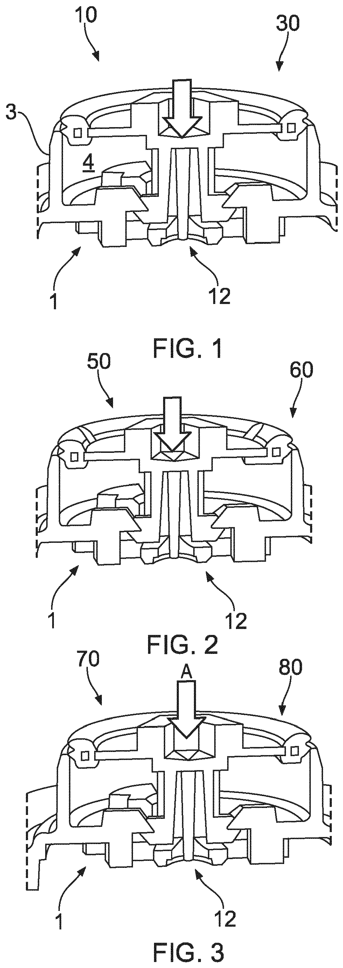

**Figure 1** illustrates a side section view of a fastener according to an example embodiment, preassembled in a door module;
**Figure 2** illustrates a side section view of a fastener according to another example embodiment, preassembled in a door module;
**Figure 3** illustrates a side section view of a fastener according to a further example embodiment, preassembled in a door module;
**Figure 4** illustrates a side section view of a fastener according to an example embodiment, preassembled in a door module;
**Figure 5** illustrates a section view of a fastener according to an example embodiment, preassembled in a door module;
**Figure 6** illustrates a side section view of a fastener according to an example embodiment, preassembled in a door module and positioned above a housing;
**Figure 7** illustrates a section view of a fastener according to an example embodiment, in a door module and fastened within a housing during the assembly phase;
**Figure 8** illustrates an enlarged section view of the fastener of Figure 7, showing a detailed view of the fastener and gasket;
**Figure 9** illustrates a section view of a fastener according to an example embodiment, fastened within a housing;
**Figure 10** illustrates another section view of a fastener according to an example embodiment, fastened within a housing;

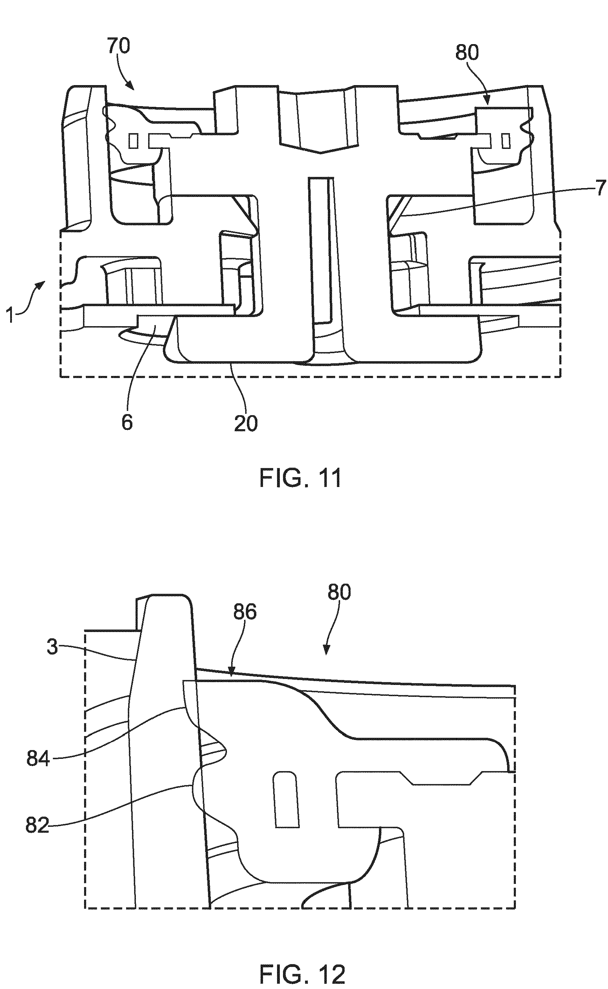

**Figure 11** illustrates a section view of a fastener according to an example embodiment in a configuration in which the fastener is turned and moves upwards;
**Figure 12** illustrates an enlarged section view of the fastener of Figure 11, showing a detailed view of the fastener and gasket;
**Figure 13** illustrates a fastener according to an example embodiment, from: **(a)** a perspective front view; **(b)** a bottom plan view; **(c)** a section view; **(d)** a side section view; **(e)** an enlarged section view showing a mould line of a gasket;
**Figure 14** illustrates a fastener according to another example embodiment, from: **(a)** a perspective front view; **(b)** a bottom plan view; **(c)** a section view; **(d)** a side section view; **(e)** an enlarged section view showing a mould line of a gasket;
**Figure 15** illustrates a fastener according to a further example embodiment, from: **(a)** a perspective front view; **(b)** a bottom plan view; **(c)** a section view; **(d)** a side section view; **(e)** an enlarged section view showing a mould line of a gasket;
**Figure 16** illustrates a fastener according to a further example embodiment, from: **(a)** a perspective front view; **(b)** a bottom plan view; **(c)** a section view; **(d)** a side section view; **(e)** an enlarged section view showing a mould line of a gasket; and
**Figure 17** illustrates a fastener according to a further example embodiment, from **(a)** a perspective front view; **(b)** a bottom plan view; **(c)** a section view; **(d)** a side section view; **(e)** an enlarged section view showing a mould line of a gasket.

### Description

The described example embodiment relates to a fastener assembly for a vehicle and in particular to a sealing fastener. However, the invention is not limited to fastener for vehicle structures but may also be used for any other suitable structure.

Certain terminology is used in the following description for convenience only and is not limiting. The words 'right', 'left', 'lower', 'upper', 'front', 'rear', 'upward', 'down', 'downward', 'above' and 'below' designate directions in the drawings to which reference is made and are with respect to the described component when assembled and mounted (e.g. *in situ*)*.* The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean 'including but not limited to', and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

The illustrated example embodiment(s) relate(s) to a fastener 10, 50, 70, 90, 110 provided with a gasket 30, 60, 80, 100, 120 over-moulded on the fastener 10, 50, 70, 90, 110 to improve sealing. In one example embodiment, the fastener 10, 50, 70, 90, 110 is made of plastic. A gasket 30, 60, 80, 100, 120 is over-moulded on the fastener 10, 50, 70, 90, 110 to ensure a tight sealing against, for example, water. The gasket 30, 60, 80, 100, 120 has a predetermined interference with the fastener's 10, 50, 70, 90, 110 housing 1.

The drawings illustrate a new design for a fastener 10, 50, 70, 90, 110 with gasket 30, 60, 80, 100, 120 that is displaceable in a direction coaxial (A) with the installation direction of the fastener 10, 50, 70, 90, 110 (i.e. along the axis of rotation 24). The gasket 30, 60, 80, 100, 120 can displace and therefore slip in a predetermined direction, allowing friction to be reduced. This facilitates a lower force required for assembly, allowing the fastener 10, 50, 70, 90, 110 to be more easily and quickly installed by the user. When the fastener 10, 50, 70, 90, 110 is pushed in an opposite direction to the predetermined direction (A), the lip 32, 34, 62, 64, 82, 84, 102, 104, 112, 114 of the gasket 30, 60, 80, 100, 120 tends to rotate (or flip over) and friction increases, which allows the gasket 30, 60, 80, 100, 120 to provide sealing properties. The gasket 30, 60, 80, 100, 120 is provided with an upper lip 34, 64, 84, 104, 114 and a lower lip 32, 62, 82, 102, 112 displaced from one another along a direction of insertion of the fastener 10, 50, 70, 90, 110 into the housing 1.

During use, the fastener 10, 50, 70, 90, 110 is preassembled, for example, on a door module (not shown). The fastener 10, 50, 70, 90, 110 is pushed down inside a housing 1 of a door module to mount the fastener 10, 50, 70, 90, 110 within the housing 1, and then the fastener 10, 50, 70, 90, 110 is rotated to lock it in place. While the fastener 10, 50, 70, 90, 110 is rotated, for example in a quarter turn, the fastener 10, 50, 70, 90, 110 moves upwards so that a hammer portion 20 of the fastener 10, 50, 70, 90, 110 contacts with the door module, providing a seal between the fastener 10, 50, 70, 90, 110 and the door module. In one specific embodiment, the upper lip 34, 64, 84, 104, 114 of the gasket 30, 60, 80, 100, 120 has a greater diameter than the lower lip 32, 62, 82, 102, 112 of the gasket 30, 60, 80, 100, 120 to provide further improved sealing between the fastener 10, 50, 70, 90, 110 and the door module. In another specific embodiment, the lower lip 32, 62, 82, 102, 112 of the gasket 30, 60, 80, 100, 120 has a greater diameter than the upper lip 34, 64, 84, 104, 114 of the gasket 30, 60, 80, 100, 120 to provide further improved sealing between the fastener 10, 50, 70, 90, 110 and the door module

The housing 1 is shown having a collar 3 with an inner surface 4 against which the gasket 30, 60, 80, 100, 120 sealingly engages to provide a fluid-tight seal. The collar 3 is generally cylindrical and the inner surface 4 in an inner circumferential surface.

The fastener 10, 50, 70, 90, 110 has a body 12 with a flange portion 14 onto which the gasket 30, 60, 80, 100, 120 is mounted, and a gripping portion on which barbed members 18 are formed. The gasket 30, 60, 80, 100, 120 is mounted circumferentially on the flange portion 14.

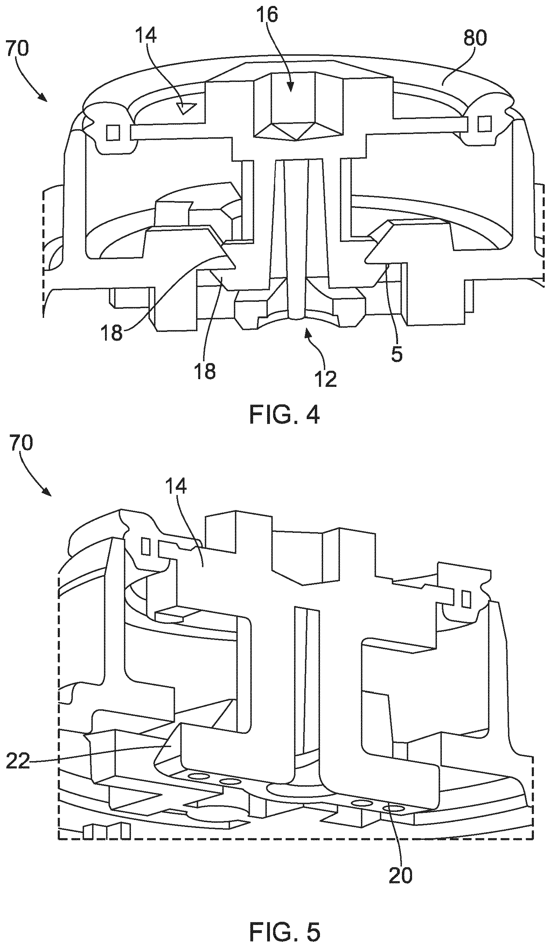

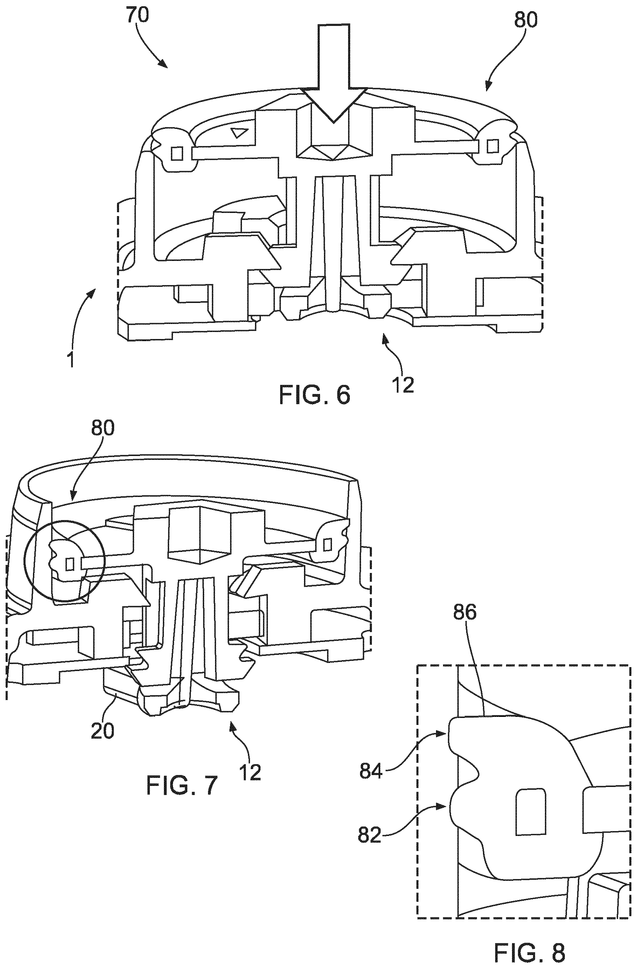

The barbed members 18 engage with corresponding edges 5 of the housing 1 to secure the fastener 10, 50, 70, 90, 110 in a first position (as shown in Figures 4 and 6). In the first position, the assembly formed by the housing 1 and the fastener 10, 50, 70, 90, 110 may be considered a pre-assembly which can be secured to a second panel 6 or housing to form a complete assembly. The complete assembly may be a door module. Panel 6 may be made of metal.

The barbed members 18 and edges 5 are arranged to allow the fastener 10, 50, 70, 90, 110 to move in a pre-determined direction (A) whilst substantially preventing movement in the opposite direction.

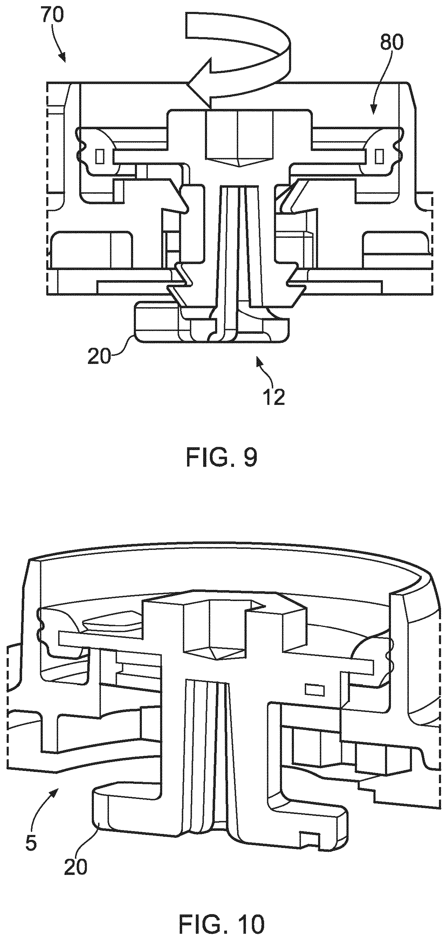

By pressing the fastener 10, 50, 70, 90, 110, for example using a tool to engage the head 16 of the fastener 10, 50, 70, 90, 110, the user is able to easily move the fastener 10, 50, 70, 90, 110 through an opening 5 in the housing 1 and into a second position (see Figure 10). In the second position, the user can then rotate the fastener 10, 50, 70, 90, 110 about an axis of rotation 24 such that the hammer portion 20 is rotated from an unlocked position into a locked position. In the locked position, the hammer portion 20 presses against a panel 6 to further secure the fastener 10, 50, 70, 90, 110 to the housing 1. While the panel 6 may be part of the housing 1, it would be apparent that the panel 6 may be part of a second housing and therefore the fastener 10, 50, 70, 90, 110 can be used to secure two housings together. While a hammer portion 20 is described, it would be apparent this was merely one example of a retaining member suitable for engaging the panel 6 in the manner described.

Furthermore, as the fastener 10, 50, 70, 90, 110 is rotated into the second position, protrusions formed on the body 12 of the fastener 10, 50, 70, 90, 110 engage one or more of the edges 5 to urge the fastener in a second direction opposite to the insertion direction (A). Whilst enhancing the engagement between the hammer portion 20 and the panel 6, this further serves to increase the sealing force between the gasket 30, 60, 80, 100, 120 and the collar 3 due to the specific configuration of the gasket 30, 60, 80, 100, 120. In particular, as described below, the gasket 30, 60, 80, 100, 120 is configured, for example shaped, such that its engagement with the inner surface 4 of the collar 3 generates a lower resistive force during insertion of the fastener 10, 50, 70, 90, 110 in the insertion direction (A), and a higher resistive force during movement of the fastener 10, 50, 70, 90, 110 in the second direction as the fastener 10, 50, 70, 90, 110 is rotated and the protrusions urge the fastener 10, 50, 70, 90, 110 in the second direction.

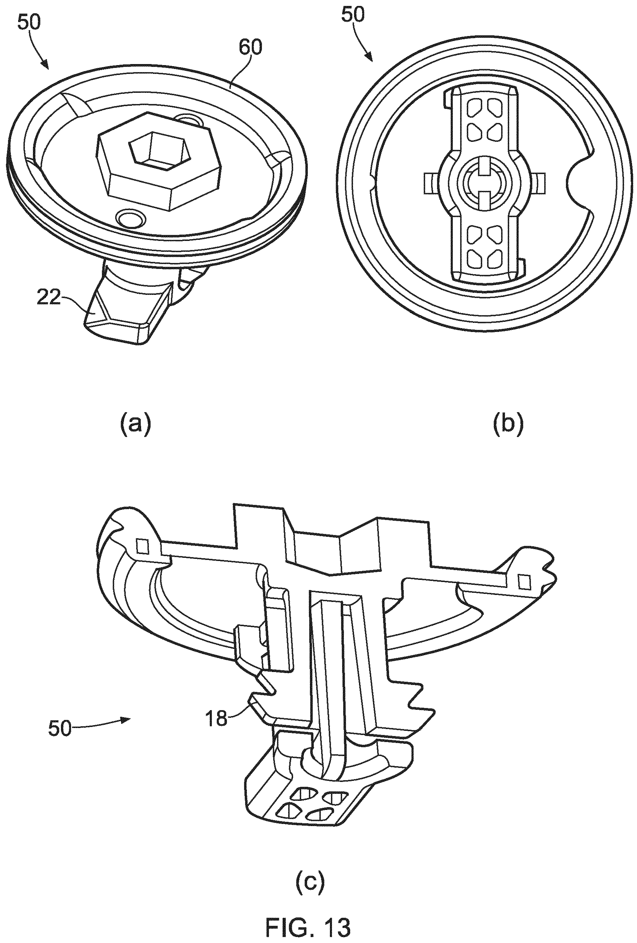

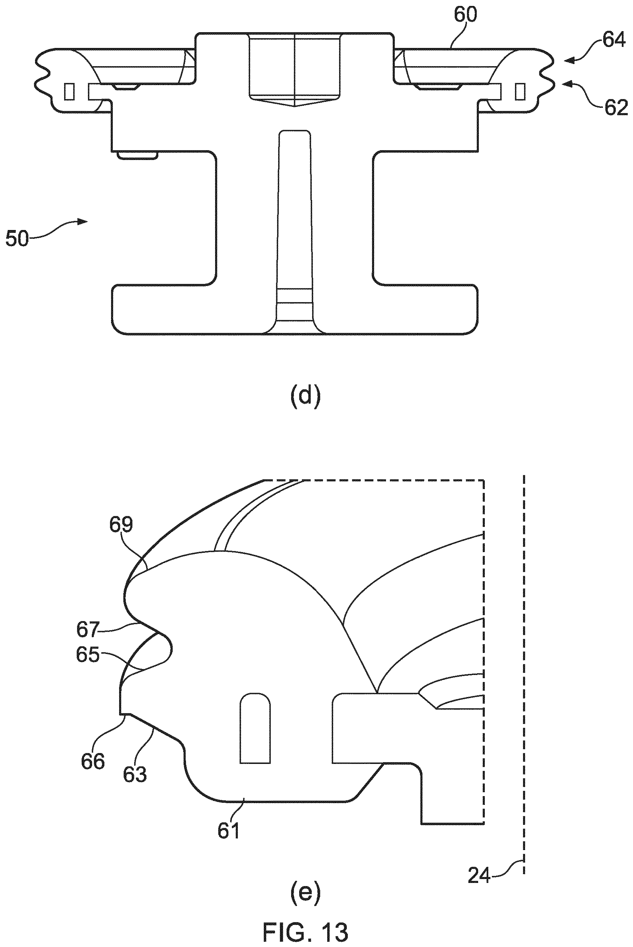

Figures 13(d) and 13(e) show fastener 50 with a gasket 60 having an upper lip 64 and a lower lip 62. The lower lip 62 is spaced from a bottom surface 61 of the gasket 60. The relative terms "upper", "lower", "bottom" and "top" are relative to the insertion direction (A). Thus, the upper lip 64 may also be considered to be above the lower lip 62. The lower lip 62 has a leading edge 63 and a trailing edge 65. The upper lip 64 also has a leading edge 67 and a trailing edge 69. The terms "leading" and "trailing" are relative to the insertion direction (A). As shown in the Figures, the leading edges 63, 67 forms a larger angle relative to the insertion direction (A) than the trailing edge 65, 69. The leading edge 63 of the lower lip 62 is also substantially straight, thus forming a flat leading surface around the lower lip 62. The trailing edge 65 of the lower lip 62 has an arcuate profile. The leading edge 67 and trailing edge 69 of the upper lip 64 have arcuate profiles. This arrangement reduces the amount of force needed to insert the fastener 50 in the insertion direction (A) compared to moving the fastener 50 in a direction opposite to the insertion direction (A), as the lips 62, 64 of the gasket will have a different stiffness depending on whether the fastener 50 is being inserted or moved in an opposite direction. As the gasket 60 may be made injection moulded, the gasket 60 will include a mould line division 66. In the illustrated example, the mould line division line 66 is on the lower lip 62 and is joined to the leading edge 63 of the lower lip 62.

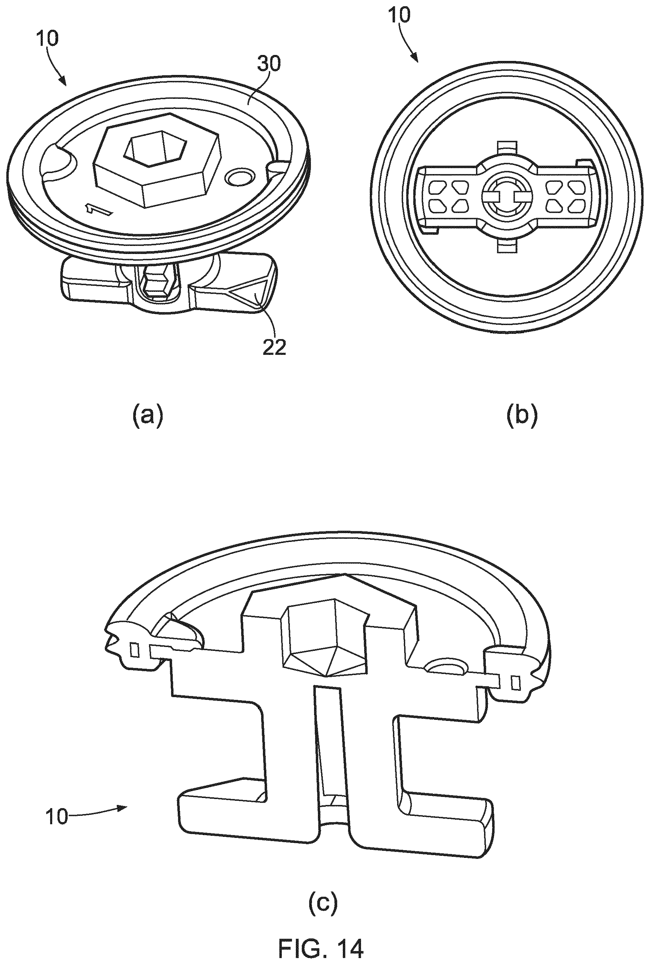

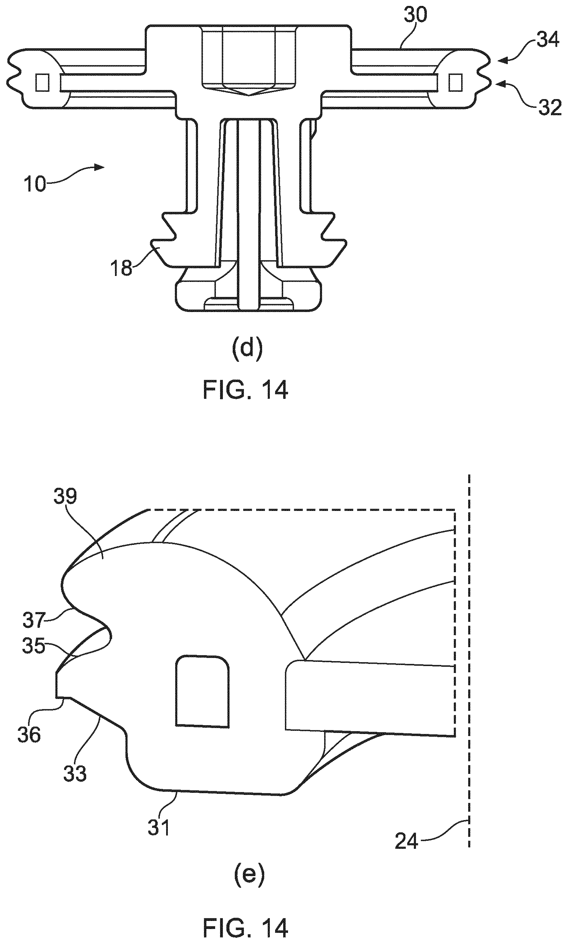

Figures 14(d) and 14(e) show fastener 10 with a gasket 30 having an upper lip 34 and a lower lip 32. The lower lip 32 is spaced from a bottom surface 31 of the gasket 30. The lower lip 32 has a leading edge 33 and a trailing edge 35. The upper lip 34 also has a leading edge 37 and a trailing edge 39. As shown in the Figures, the leading edges 33, 37 form a larger angle relative to the insertion direction (A) than the trailing edges 35, 39. The leading edge 33 of the lower lip 32 is also substantially straight, thus forming a flat leading surface around the lower lip 32. The trailing edge 35 of the lower lip 32 has an arcuate profile. The leading edge 37 and trailing edge 39 of the upper lip 34 have arcuate profiles. This arrangement reduces the amount of force needed to insert the fastener 10 in the insertion direction (A) compared to movement of the fastener 10 in a direction opposite to the insertion direction (A), as the lips 32, 34 of the gasket will have a different stiffness depending on whether the fastener 10 is being inserted or moved in an opposite direction. As the gasket 30 may be made from injection moulding, the gasket 30 will include a mould line division 36. In the illustrated example, the mould line division line 36 is on the lower lip 32 and is joined to the leading edge 33 of the lower lip 32.

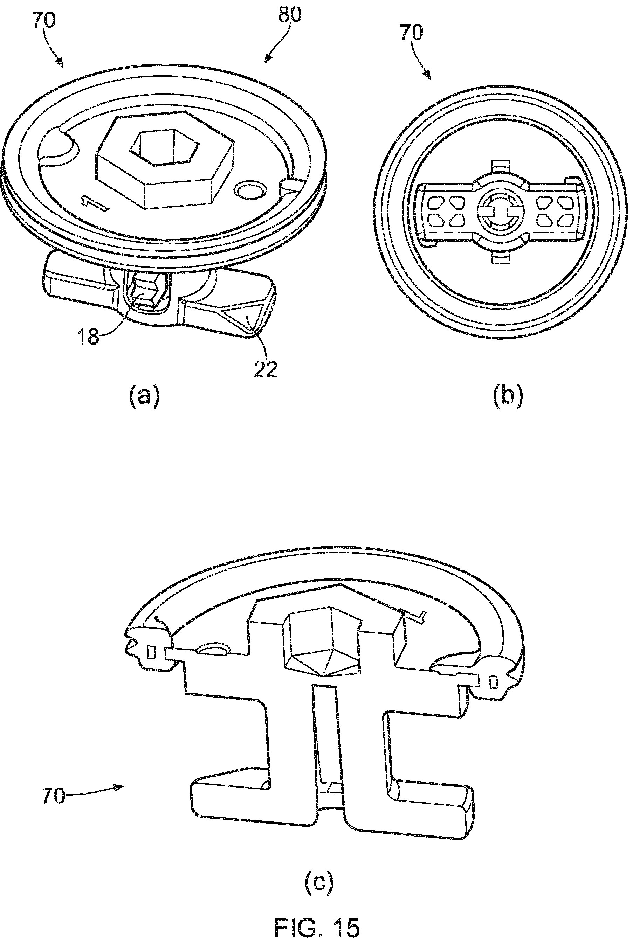

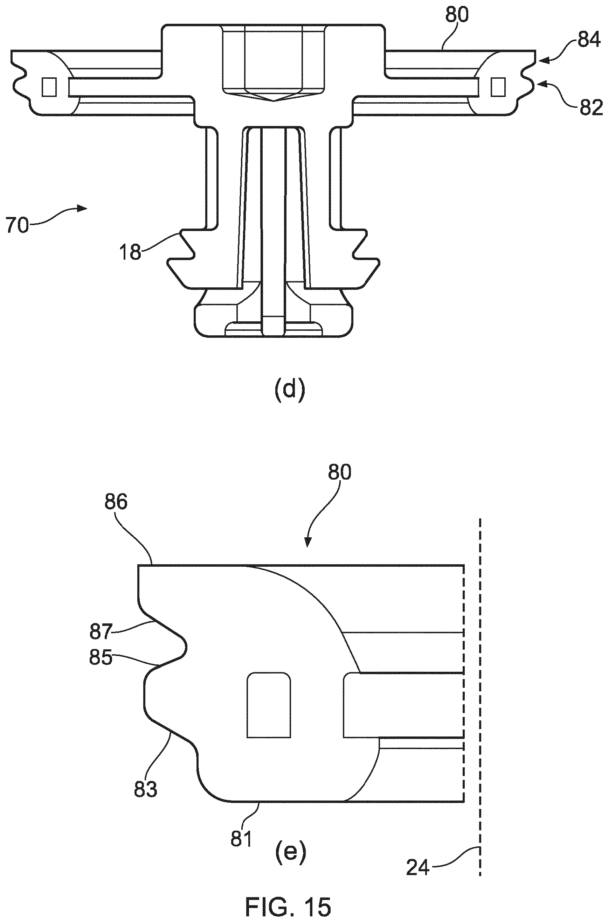

Figures 15(d) and 15(e) show fastener 70 with a gasket 80 having an upper lip 84 and a lower lip 82. The lower lip 82 is spaced from a bottom surface 81 of the gasket 80. The lower lip 82 has a leading edge 83 and a trailing edge 85. The upper lip 84 also has a leading edge 87. However, in contrast to the gaskets 30, 60 of fasteners 10, 50, gasket 80 has a mould line division 86 as the trailing edge of the upper lip 84. As shown in the Figures, the leading edge 83 forms a larger angle relative to the insertion direction (A) than the trailing edge 85 of the lower lip 82. However, for upper lip 84, the mould line division 86 is substantially perpendicular to the insertion direction (A) and forms a greater angle to the insertion direction (A) than the leading edge 87 of the upper lip 84. The leading edge 83 of the lower lip 82 is also substantially straight, thus forming a flat leading surface around the lower lip 82. The trailing edge 85 of the lower lip 82 has an arcuate profile. The leading edge 87 and mould line division 86 of the upper lip 34 have substantially straight profiles. By providing the mould line division 86 as an upper surface of the gasket 80, this improves the moldability of the gasket 80 whilst still optimizing the load for insertion and the water tightness of the gasket 80. This arrangement reduces the amount of force needed to insert the fastener 70 in the insertion direction (A) compared to the force needed to move the fastener 70 in the direction opposite to the insertion direction (A), as the lips 82, 84 of the gasket 80 will have a different stiffness depending on whether the fastener 70 is being inserted or moved in an opposite direction.

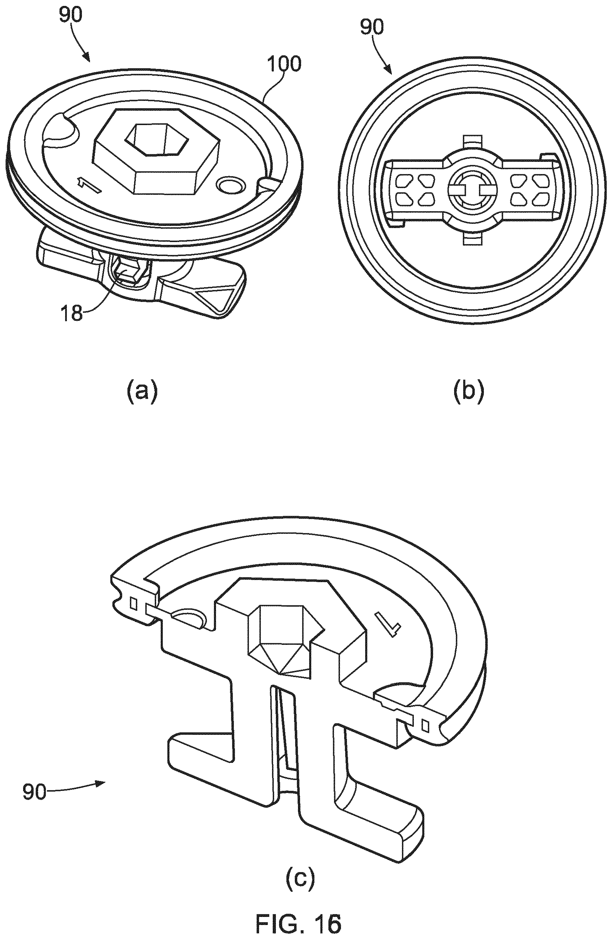

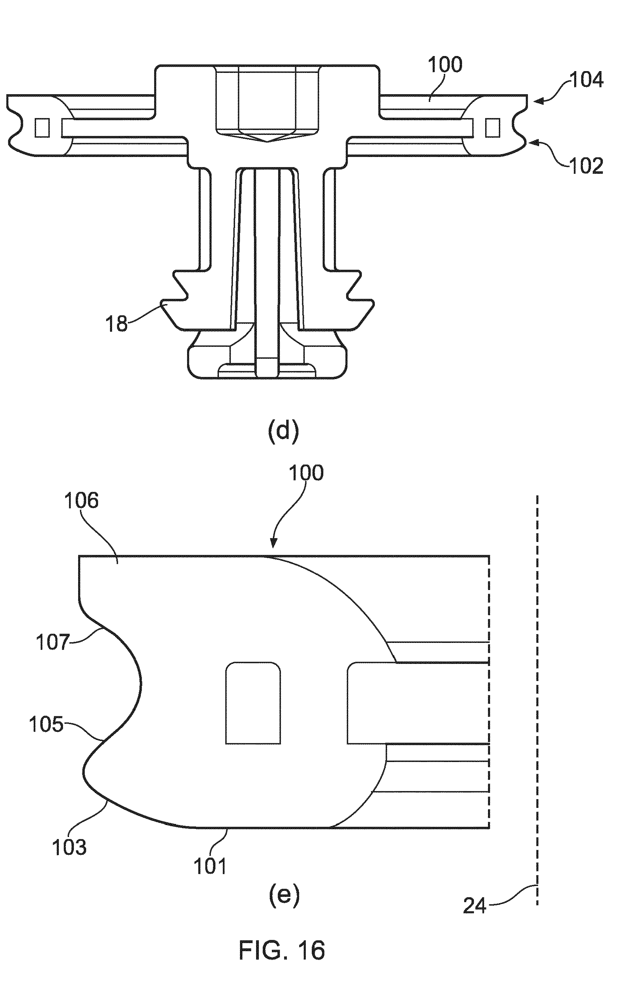

Figures 16(d) and 16(e) show fastener 90 with a gasket 100 having an upper lip 104 and a lower lip 102. The lower lip 102 has a trailing edge 105 and a leading edge 103. The leading edge 103 is continuous with a bottom surface 101 of the gasket 100. The upper lip 104 also has a leading edge 107. However, in contrast to the gaskets 30, 60 of fasteners 10, 50, gasket 100 has a mould line division 106 as the trailing edge of the upper lip 104. As shown in the Figures, the leading edge 103 forms a larger angle relative to the insertion direction (A) than the trailing edge 105 of the lower lip 102. However, for upper lip 104, the mould line division 106 is substantially perpendicular to the insertion direction (A) and forms a greater angle to the insertion direction (A) than the leading edge 107 of the upper lip 104. The leading edge 103 and trailing edge 105 of the lower lip 102 have arcuate profiles. The leading edge 107 of the upper lip 104 has an arcuate profile. By providing the mould line division 106 as an upper surface of the gasket 100, this improves the moldability of the gasket 100 whilst still optimizing the load for insertion and the water tightness of the gasket 100. This arrangement reduces the amount of force needed to insert the fastener 90 in the insertion direction compared to the force needed to move the fastener 90 in a direction opposite to the insertion direction (A), as the lips 102, 104 of the gasket 100 will have a different stiffness depending on whether the fastener 90 is being inserted or moved in an opposite direction.

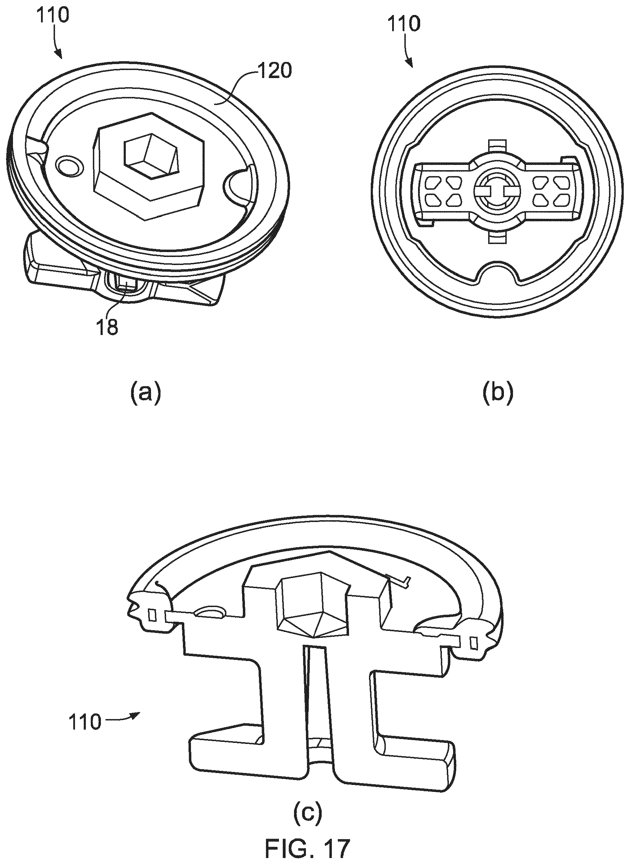

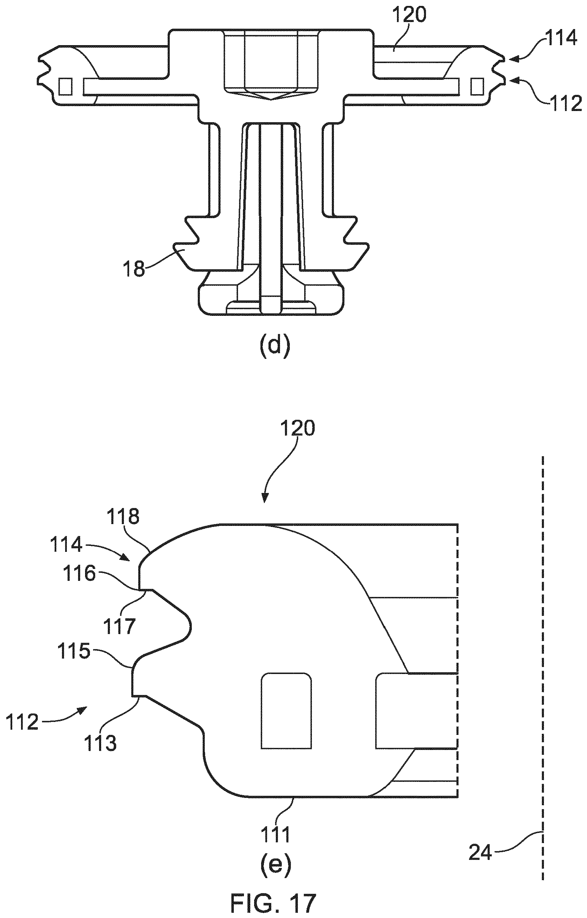

Figures 17(d) and 17(e) show a fastener 110 with a gasket 120 having an upper lip 114 and a lower lip 112. The lower lip 112 is spaced from a bottom surface 111 of the gasket 120. The lower lip 112 has a leading edge 113 and a trailing edge 115. The upper lip 114 also has a leading edge 117 and a trailing edge 118. As shown in the Figures, the leading edges 113, 117 form a larger angle relative to the insertion direction (A) than the trailing edges 115, 118. The leading edge 113 of the lower lip 112 is also substantially straight, thus forming a flat leading surface around the lower lip 112. The trailing edge 115 of the lower lip 112 has an arcuate profile. The leading edge 117 of the upper lip 114 is also substantially straight, thus forming a flat leading surface around the upper lip 114. The trailing edge 118 of the upper lip 114 has an arcuate profile. This arrangement reduces the amount of force needed to insert the fastener 110 in the insertion direction (A) compared to movement of the fastener 110 in a direction opposite to the insertion direction (A), as the lips 112, 114 of the gasket 120 will have a different stiffness depending on whether the fastener 110 is being inserted or moved in an opposite direction. As the gasket 120 may be made from injection moulding, the gasket 120 will include a mould line division 116. In the illustrated example, the mould line division line 116 is on the upper lip 114 and is joined to the leading edge 117 of the upper lip 114. As illustrated, the lower lip 112 has a greater diameter than the upper lip 114. That is, the lower lip 112 extends further in an axial direction from axis 24 than the upper lip 114. Accordingly, the lower lip 112 creates greater resistance with the collar 3 than the upper lip 114.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A fastener (10, 50, 70, 90, 110) for securing to at least a first panel (1) having a collar (3) defining an opening formed therein, the fastener (10, 50, 70, 90, 110) comprising:
a fastening portion adapted to be inserted in a first direction (A) through the opening of the collar (3) and then moved in a second direction into an engaged positioned to secure the fastener (10, 50, 70, 90, 110) to the first panel (1), the second direction being opposite to the first direction (A); and
a body (12) having a circumferential gasket (30, 60, 80, 100, 120) secured thereto such that the gasket (30, 60, 80, 100, 120) is arranged to sealingly engage with an inner surface (4) of the collar (3) when the fastener (10, 50, 70, 90, 110) is inserted into the collar (3);
**characterised in that** the gasket (30, 60, 80, 100, 120) is configured to engage the inner surface (4) of the collar (3) to provide a first level of resistance when moving in the first direction (A) and a second level of resistance when moving in the second direction, the first level of resistance being lower than the second level of resistance; and
**in that** the gasket (30, 60, 80, 100, 120) comprises an upper lip (34, 64, 84, 104, 114) and a lower lip (32, 62, 82, 102, 112) spaced in the first direction (A).

2. A fastener according to claim 1, further comprising a protrusion (18) arranged to engage a corresponding protrusion (5) of the first panel (1) when the fastener (10, 50, 70, 90, 110) is inserted into the collar (3), the protrusion (18) and corresponding protrusion (5) being configured to move the fastener (10, 50, 70, 90, 110) in the second direction on rotation of the fastener (10, 50, 70, 90, 110) relative to the first panel (1).

3. A fastener according to claim 2, wherein the fastening portion comprises a retaining member (20) adapted to move behind a portion of the first panel (1) and optionally a second panel (6) on rotation of the fastener (10, 50, 70, 90, 110) relative to the first panel (1).

4. A fastener according to any preceding claim, wherein the upper lip (34, 64, 84, 104) and the lower lip (32, 62, 82, 102) define respective circumferential perimeters of the gasket (30, 60, 80, 100), and wherein the upper lip (34, 64, 84, 104) has a larger diameter than the lower lip (32, 62, 82, 102).

5. A fastener according to any of claims 1 to 3, wherein the upper lip (114) and the lower lip (112) define respective circumferential perimeters of the gasket (120), and wherein the lower lip (112) has a larger diameter than the upper lip (114).

6. A fastener according to any preceding claim, wherein the gasket (30, 60, 80, 100, 120) comprises a mould division line (36, 66, 86, 106, 116).

7. A fastener according to claim 6, wherein the mould division line (86, 106) is disposed on an upper surface of the upper lip (84, 104).

8. A fastener according to claim 6 or claim 7, wherein the mould division line (36, 66, 116) is disposed on a lower surface (33, 63, 113) of the lower lip (32, 62, 112).

9. A fastener according to claim 6, wherein the mould division line (116) is disposed on a lower surface (117) of the upper lip (114).

10. A fastener according to any of claims 6 to 9, wherein the mould division line (36, 66, 86, 106, 116) is disposed on a circumferential edge of the upper lip (34, 64, 84, 104, 114) or the lower lip (32, 62, 82, 102, 112).

11. A panel (6) comprising an opening and a fastener (10, 50, 70, 90, 110) according to any preceding claim mounted within the opening.

## Patentansprüche

1. Befestigungselement (10, 50, 70, 90, 110) zum Befestigen an mindestens einer ersten Platte (1) mit einem Kragen (3), der eine darin ausgebildete Öffnung definiert, wobei das Befestigungselement (10, 50, 70, 90, 110) aufweist:
einen Befestigungsabschnitt, der ausgelegt ist, um in eine erste Richtung (A) durch die Öffnung des Kragens (3) eingeführt und dann in eine zweite Richtung in eine eingegriffene Position bewegt zu werden, um das Befestigungselement (10, 50, 70, 90, 110) an der ersten Platte (1) zu befestigen, wobei die zweite Richtung der ersten Richtung (A) entgegengesetzt ist; und
einen Körper (12), der eine Umfangsdichtung (30, 60, 80, 100, 120) aufweist, die so daran befestigt ist, dass die Dichtung (30, 60, 80, 100, 120) so angeordnet ist, dass sie mit einer Innenfläche (4) des Kragens (3) abdichtend in Eingriff kommt, wenn das Befestigungselement (10, 50, 70, 90, 110) in den Kragen (3) eingesetzt ist;
**dadurch gekennzeichnet, dass** die Dichtung (30, 60, 80, 100, 120) so konfiguriert ist, dass sie mit der Innenfläche (4) des Kragens (3) in Eingriff kommt, um einen ersten Widerstandspegel bereitzustellen, wenn sie sich in der ersten Richtung (A) bewegt, und einen zweiten Widerstandspegel bereitzustellen, wenn sie sich in der zweiten Richtung bewegt, wobei der erste Widerstandspegel niedriger als der zweite Widerstandspegel ist; und
dadurch, dass die Dichtung (30, 60, 80, 100, 120) eine obere Lippe (34, 64, 84, 104, 114) und eine untere Lippe (32, 62, 82, 102, 112) aufweist, die in der ersten Richtung (A) beabstandet sind.

2. Befestigungselement nach Anspruch 1, das ferner einen Vorsprung (18) aufweist, der so angeordnet ist, dass er mit einem entsprechenden Vorsprung (5) der ersten Platte (1) in Eingriff kommt, wenn das Befestigungselement (10, 50, 70, 90, 110) in den Kragen (3) eingesetzt wird, wobei der Vorsprung (18) und der entsprechende Vorsprung (5) so konfiguriert sind, dass sie das Befestigungselement (10, 50, 70, 90, 110) bei Drehung des Befestigungselements (10, 50, 70, 90, 110) in der zweiten Richtung relativ zu der ersten Platte (1) bewegen.

3. Befestigungselement nach Anspruch 2, wobei der Befestigungsabschnitt ein Halteelement (20) aufweist, das ausgelegt ist, um sich bei Drehung des Befestigungselements (10, 50, 70, 90, 110) relativ zur ersten Platte (1) hinter einen Abschnitt der ersten Platte (1) und wahlweise hinter eine zweite Platte (6) zu bewegen.

4. Befestigungselement nach einem vorhergehenden Anspruch, wobei die obere Lippe (34, 64, 84, 104) und die untere Lippe (32, 62, 82, 102) jeweilige umlaufende Umfänge der Dichtung (30, 60, 80, 100) definieren und wobei die obere Lippe (34, 64, 84, 104) einen größeren Durchmesser als die untere Lippe (32, 62, 82, 102) aufweist.

5. Befestigungselement nach einem der Ansprüche 1 bis 3, wobei die obere Lippe (114) und die untere Lippe (112) jeweilige umlaufende Umfänge der Dichtung (120) definieren und wobei die untere Lippe (112) einen größeren Durchmesser als die obere Lippe (114) aufweist.

6. Befestigungselement nach einem vorhergehenden Anspruch, wobei die Dichtung (30, 60, 80, 100, 120) eine Formteilungslinie (36, 66, 86, 106, 116) aufweist.

7. Befestigungselement nach Anspruch 6, wobei die Formteilungslinie (86, 106) auf einer oberen Fläche der oberen Lippe (84, 104) angeordnet ist.

8. Befestigungselement nach Anspruch 6 oder Anspruch 7, wobei die Formteilungslinie (36, 66, 116) auf einer unteren Fläche (33, 63, 113) der unteren Lippe (32, 62, 112) angeordnet ist.

9. Befestigungselement nach Anspruch 6, wobei die Formteilungslinie (116) auf einer unteren Fläche (117) der oberen Lippe (114) angeordnet ist.

10. Befestigungselement nach einem der Ansprüche 6 bis 9, wobei die Formteilungslinie (36, 66, 86, 106, 116) an einer Umfangskante der oberen Lippe (34, 64, 84, 104, 114) oder der unteren Lippe (32, 62, 82, 102, 112) angeordnet ist.

11. Platte (6), die eine Öffnung und ein Befestigungselement (10, 50, 70, 90, 110) nach einem vorhergehenden Anspruch aufweist, das innerhalb der Öffnung montiert ist.

## Revendications

1. Élément de fixation (10, 50, 70, 90, 110) destiné à être arrimé à au moins un premier panneau (1) ayant un collier (3) définissant une ouverture formée dans celui-ci, l'élément de fixation (10, 50, 70, 90, 110) comprenant :
une portion de fixation adaptée pour être insérée dans une première direction (A) à travers l'ouverture du collier (3) et ensuite déplacée dans une deuxième direction jusque dans une position mise en prise pour arrimer l'élément de fixation (10, 50, 70, 90, 110) au premier panneau (1), la deuxième direction étant opposée à la première direction (A) ; et
un corps (12) ayant un joint (30, 60, 80, 100, 120) circonférentiel arrimé à celui-ci de telle sorte que le joint (30, 60, 80, 100, 120) est agencé pour venir en prise de manière étanche avec une surface intérieure (4) du collier (3) lorsque l'élément de fixation (10, 50, 70, 90, 110) est inséré dans le collier (3) ;
**caractérisé en ce que** le joint (30, 60, 80, 100, 120) est configuré pour venir en prise avec la surface intérieure (4) du collier (3) pour fournir un premier niveau de résistance lorsqu'il se déplace dans la première direction (A) et un deuxième niveau de résistance lorsqu'il se déplace dans la deuxième direction, le premier niveau de résistance étant inférieur au deuxième niveau de résistance ; et
**en ce que** le joint (30, 60, 80, 100, 120) comprend une lèvre supérieure (34, 64, 84, 104, 114) et une lèvre inférieure (32, 62, 82, 102, 112) espacées dans la première direction (A).

2. Élément de fixation selon la revendication 1, comprenant en outre une saillie (18) agencée pour venir en prise avec une saillie correspondante (5) du premier panneau (1) lorsque l'élément de fixation (10, 50, 70, 90, 110) est inséré jusque dans le collier (3), la saillie (18) et la saillie correspondante (5) étant configurées pour déplacer l'élément de fixation (10, 50, 70, 90, 110) dans la deuxième direction lors de la rotation de l'élément de fixation (10, 50, 70, 90, 110) par rapport au premier panneau (1).

3. Élément de fixation selon la revendication 2, dans lequel la portion de fixation comprend un organe de retenue (20) adapté pour se déplacer derrière une portion du premier panneau (1) et facultativement un deuxième panneau (6) lors de la rotation de l'élément de fixation (10, 50, 70, 90, 110) par rapport au premier panneau (1).

4. Élément de fixation selon l'une quelconque des revendications précédentes, dans lequel la lèvre supérieure (34, 64, 84, 104) et la lèvre inférieure (32, 62, 82, 102) définissent des périmètres circonférentiels respectifs du joint (30, 60, 80, 100), et dans lequel la lèvre supérieure (34, 64, 84, 104) a un diamètre plus grand que celui de la lèvre inférieure (32, 62, 82, 102).

5. Élément de fixation selon l'une quelconque des revendications 1 à 3, dans lequel la lèvre supérieure (114) et la lèvre inférieure (112) définissent des périmètres circonférentiels respectifs du joint (120), et dans lequel la lèvre inférieure (112) a un diamètre plus grand que celui de la lèvre supérieure (114).

6. Élément de fixation selon l'une quelconque des revendications précédentes, dans lequel le joint (30, 60, 80, 100, 120) comprend une ligne de division de moule (36, 66, 86, 106, 116).

7. Élément de fixation selon la revendication 6, dans lequel la ligne de division de moule (86, 106) est disposée sur une surface supérieure de la lèvre supérieure (84, 104).

8. Élément de fixation selon la revendication 6 ou la revendication 7, dans lequel la ligne de division de moule (36, 66, 116) est disposée sur une surface inférieure (33, 63, 113) de la lèvre inférieure (32, 62, 112).

9. Élément de fixation selon la revendication 6, dans lequel la ligne de division de moule (116) est disposée sur une surface inférieure (117) de la lèvre supérieure (114).

10. Élément de fixation selon l'une quelconque des revendications 6 à 9, dans lequel la ligne de division de moule (36, 66, 86, 106, 116) est disposée sur un bord circonférentiel de la lèvre supérieure (34, 64, 84, 104, 114) ou de la lèvre inférieure (32, 62, 82, 102, 112).

11. Panneau (6) comprenant une ouverture et un élément de fixation (10, 50, 70, 90, 110) selon l'une quelconque des revendications précédentes montée au sein de l'ouverture.
